Europäisches Patentamt

European Patent Office

Office européen des brevets

(11) Veröffentlichungsnummer : **0 411 556 B1**

(12) # EUROPÄISCHE PATENTSCHRIFT

(45) Veröffentlichungstag der Patentschrift :
15.07.92 Patentblatt 92/29

(51) Int. Cl.$^5$ : **F16L 11/133**, F16L 11/12,
B63B 27/34

(21) Anmeldenummer : **90114658.9**

(22) Anmeldetag : **31.07.90**

(54) **Förderschlauch mit mindestens einem hülsenförmigen Schwimmkörper.**

(30) Priorität : **02.08.89 DE 8909324 U**

(43) Veröffentlichungstag der Anmeldung :
**06.02.91 Patentblatt 91/06**

(45) Bekanntmachung des Hinweises auf die
Patenterteilung :
**15.07.92 Patentblatt 92/29**

(84) Benannte Vertragsstaaten :
**DE FR GB IT NL**

(56) Entgegenhaltungen :
DE-A- 2 139 111
DE-B- 2 802 826

(73) Patentinhaber : **EDDELBÜTTEL & SCHNEIDER
KG
An der Grenzkehre 7
W-2105 Seevetal 2 (DE)**

(72) Erfinder : **Schneider, Klaus
Altwiedenthaler-Höhe
W-2104 Hamburg 92 (DE)**

(74) Vertreter : **Liebelt, Rolf, Dipl.-Ing.
Baumbach & Liebelt Patentanwaltskanzlei
Ballindamm 15
W-2000 Hamburg 1 (DE)**

EP 0 411 556 B1

Jouve, 18, rue Saint-Denis, 75001 PARIS

## Beschreibung

Die Erfindung betrifft einen Förderschlauch mit einer durch eine Bewehrung verstärkten Schlauchwand, mindestens einem geteilt ausgebildeten sowie den Schlauch umschließenden hülsenförmigen Schwimmkörper und mindestens einer auf der Außenseite um seinen Umfang verlaufenden Schulter, die in eine korrespondierend gestaltete Nut des Schwimmkörpers eingreift, für Saugbagger oder Be- und Entladestationen von auf Reede liegenden Tankern.

Derartige aus der DE-A-2 004 007 bekannten Förderschläuche werden zu schwimmfähigen Leitungen zusammengefügt, durch die von Saugbaggern das Baggergut, das bei der Herstellung oder Vertiefungen von schiffbaren Gewässern oder bei der Gewinnung von Kies und Sand anfällt, zum Ufer gefördert wird, um in weiten Bereichen eine ungehinderte Ortsveränderung des Baggers zu ermöglichen. Ähnliche Anforderungen werden auch an die Leitungen gestellt, die aus den bekannten Förderschläuchen bestehen und an auf Reede liegende Tanker angeschlossen sind sowie den Bewegungen des Tankers, die durch Strömungen, Wind und Seegang hervorgerufen werden, folgen müssen. Dabei soll die in eine Nut im Schwimmkörper ragende Schlauchschulter verhindern, daß die Schwimmkörper durch die ständige Bewegung des schwimmenden Schlauches ihre Lage auf dem Schlauch ändern und sich z. B. an einer Stelle ansammeln. Dies würde die Balance oder gleichmäßige Schwimmfähigkeit des Schlauches erheblich beeinträchigen und könnte den Schlauch sowie dessen Anschlüsse am Bagger, Tanker oder an der Entladestation derart überlasten, daß Schlauch- und Rohrbrüche nicht auszuschließen sind.

Die auf derartige Großschläuche vorzugsweise mit einer Nennweite von 500 mm und mehr einwirkenden Zugkräfte, die z. B. von Gezeitenströmungen bewirkt werden, haben eine beträchtliche Längendehnung der Leitung zur Folge, die bei den einzelnen Förderschläuchen eine Umfangsverringerung von solchem Ausmaß hervorrufen kann, daß die Schulter ihre Aufgabe, den Schwimmkörper auf den Schlauch zu positionieren, nicht mehr erfüllen kann. Andererseits können Störungen beim Abfördern des Baggergutes Drucksteigerungen im Förderschlauch hervorrufen, die den Schlauch derart aufweiten, daß die den Schlauch umschließenden Schwimmkörper, deren Teile fest miteinander verbunden sind, vom Schlauch gesprengt werden.

In der DE-B-2 802 826 ist noch ein Gummischlauch, der in Stücke, vorbestimmter Länge gefertigt ist, mit einer durch die Bewehrung verstärkten Schlauchwand sowie großer Nennweite beschrieben. Um zu verhindern, daß nach der Vulkanisation keine vom Schlauchwerkstoff herrührenden Verringerungen in der lichten Weite im Schlauchendbereich auftreten, ist in diesen Bereichen des Schlauches ein sich über den Schlauchumfang erstreckendes ringförmiges Stützelement eingearbeitet, das aufweitbar, jedoch gegenüber seinem Umfang verkleindernden Kräften längenstabil ist. Durch die Aufweitbarkeit der Stützelemente wird zugleich sichergestellt, daß des Schlauch im Endbereich bei der Montage auf herkömmliche Anschlußstutzen die nötige Dehnbarkeit aufweist.

Aufgabe der Erfindung ist es nun, einen mit Schwimm oder Auftriebskörpern versehenen Förderschlauch, insbesondere von großer Nennweite so auszubilden, daß die auf den Schlauch einwirkenden Kräfte weder die Schwimmkörper beschädigen, noch Axialverschiebungen der Schwimmkörper auf dem Schlauch begünstigen.

Diese Aufgabe wird erfindungsgemäß, ausgehend von einem Schlauch der eingangs beschriebenen Gattung dadurch gelöst, daß im Bereich der Schulter ober- und unterhalb der Bewehrung in die Schlauchwandung äußere bzw. innere Stützelemente eingebettet sind, die eine Umfangsvergrößerung des Schlauches bei erhöhtem Innendruck sowie eine Umfangsverringerung des Schlauches bei erhöhten axialen Zugbelastungen unterbinden, ohne die Biegsamkeit des Schlauches zu beeinträchtigen.

Die Stützelemente nach der Erfindung werden bei der Herstellung des Schlauches in dessen Wandung in den zu schützenden Bereich mit eingearbeitet, so daß sie bei der späteren Benutzung des Schlauches kein irgendwie störendes Element sind. Erfindungsgemäß werden somit die vom Überdruck des Fördermediums ausgehenden und den Schlauch bis zur Zerstörung der Schwimmkörper aufweitenden Kräfte mit den äußeren Stützelementen aufgefangen, die auf der Bewehrung fest aufliegen, aus mindestens einer Lage eines Metall- oder Textilgewebes, aus Ringen oder aus vorzugsweise einer gegebenenfalls mehrlagigen Wendel mit ca. 90° Steigung zur Schlauchachse bestehen. Die zur Verhinderung einer durch Streckung bewirkten Umfangsverringerung des Schlauches bestimmten erfindungsgemäßen inneren Stützelemente sind als sich über den Schlauchumfang erstreckende, mehrteilige ringförmige Körper, die vorzugsweise als zu einem Ring zusammengefügte Wendel ausgebildet sind, deren Windungen einander berühren, unterhalb der Bewehrung in den Schlauchinnengummi eingebettet. Dadurch, daß die einzelnen Windungen der Wendel sich im Normalzustand, d. h. schon beim Einbetten in das Schlauchmaterial, vor der Vulkanisation berühren, ist die Nominallänge der inneren Stützelemente und damit zugleich der geringste Umfang der Schlauchschulter, der für eine sichere Positionierung der Schwimmkörper auf den Förderschlauch maßgebend ist, festgelegt; denn die inneren Stützelemente verhindern nicht nur eine Umfangsverringerung des Schlauches bei Zugbelastung, sondern auch dessen Schrumpfen während und nach der Vulkanisation, wodurch die Einhaltung von Fertigungstoleranzen

2

merkbar erleichtert wird. Dabei bieten die vorzugsweise aus Wendeln bestehenden Stützelement-Ringe gegenüber einteiligen Metallringen noch den Vorteil, daß sie Schlauchverformungen aufgrund äusserer Einwirkungen elastisch begegnen, während derartige Metallringe Dauerdeformationen erleiden und sogar brechen und dann den Schlauch zerstören. Dabei verhindern die erfindungsgemäßen äußeren und inneren Stützelemente Umfangsveränderungen des Schlauches nur partiell an ausgewählten Stellen wie im Bereich der Schulter, so daß im übrigen Bereich die volle Flexibilität mit sämtlichen daraus resultierenden Vorteilen eines nicht durch Einbauten versteiften Schlauches erhalten bleibt. Die erfindungsgemäßen inneren Stützelemente können auch aus einer Vielzahl von Hülsen, Ringkörpern oder Rundstücken bestehen, die der Umfangskrümmung der Schlauchwandung angepaßt und die so zu einem Ring zusammengefügt sind, daß sich ihre Enden berühren. Dabei können diese Elemente von einem als Band oder Schlauchkörper ausgebildeten inneren oder äusseren Führungselement zum Zweck besserer Konfektionsarbeit zusammengehalten werden.

Bei einer zweckmäßigen Weiterbildung der Erfindung sind über die Länge des Förderschlauches verteilt zwischen den Schultern weitere sich über den Schlauchumfang erstreckende in der Innengummischicht angeordnete innere Stützelemente angeordnet, die gegenüber ihrem Umfang verkleinernden Kräften längenstabil sind und Schlauchdeformationen elastisch aufnehmen, um ein Einknicken und dadurch einen Totalverschluß des Schlauches aufgrund von äußeren Einwirkungen zu unterbinden.

Ausführungsbeispiele der Erfindung werden noch an Hand der Zeichnungen beschrieben. Es stellen dar:

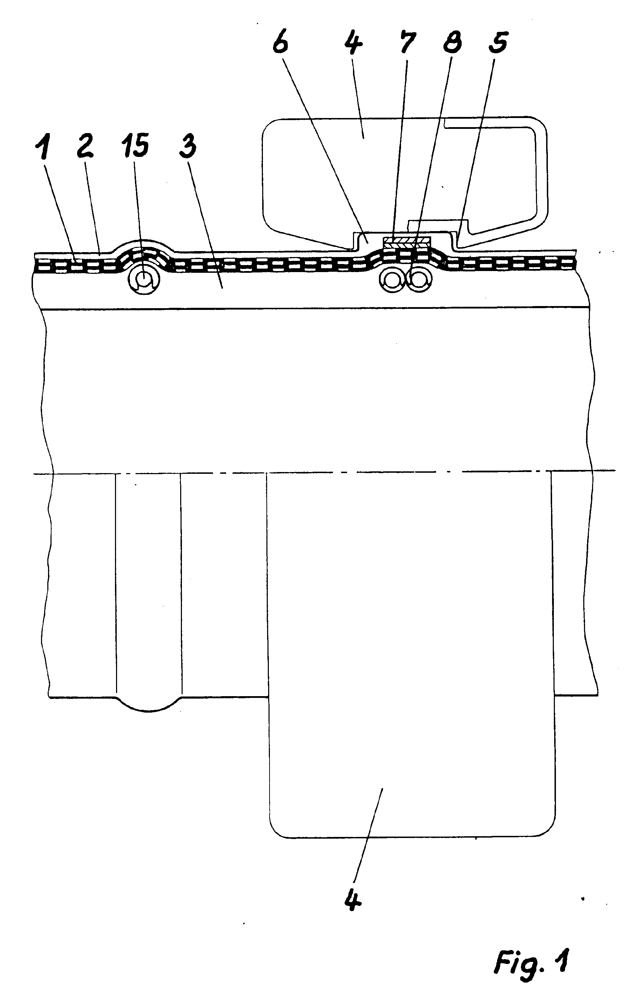

Fig. 1 eine schematische Teilschnittansicht des Abschnittes eines erfindungsgemäßen Schlauches,

Fig. 2 eine schematische Teilansicht eines im Schlauch nach Fig. 1 verwendeten inneren Stützelementes,

Fig. 3 eine schematische Teilansicht eines anderen inneren Stützelementes,

Fig. 4 eine schematische Teilansicht eines weiteren inneren Stützelementes.

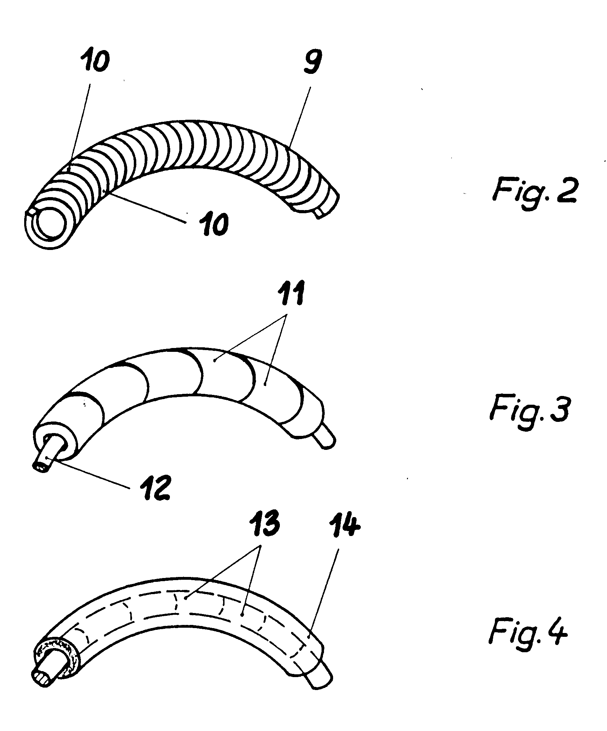

Die Innenseite der Wandung eines Gummischlauches, die in an sich bekannter Weise aus einer Bewehrungseinlage 1 mit einer Außengummischicht 2 besteht, trägt als Verschleißschutz eine Gummischicht 3. Am Schlauch sind in einem axialen Abstand zueinander geteilt ausgebildete sowie den Schlauch umschließende hülsenförmige Schwimmkörper 4 angeordnet, deren Teile in üblicher Weise (nicht dargestellt) fest miteinander verbunden sind. In die Bohrung der Schwimmkörper 4 ist eine umlaufende Nut 5 eingearbeitet, die über eine korrespondierende Schulter 6 der Außengummischicht 2 greift. Im Bereich der Schulter 6 sind in die Schlauchwandung äußere 7 und innere 8 Stützelemente festhaftend eingebettet. Dabei liegen die äußeren Stützelemente 7 fest auf der Bewehrungseinlage 1 auf und bestehen aus einer Bandage mehrerer Gewebelagen. Die unterhalb der Bewehrungseinlage 1 in der inneren Gummischicht 2 vorgesehenen inneren Stützelemente 8 sind als Wendel 9 aus Stahlprofil ausgebildet, deren Windungen 10 (Fig. 2) einander berühren.

Zwischen den Schultern 6 sind weitere innere Stützelemente 15 eingebettet, die gleichfalls aus Wendeln 9 bestehen, deren Windungen 10 (Fig. 2) einander berühren.

Das in Fig. 3 in einem Abschnitt dargestellte innere Stützelement besteht aus einer Vielzahl gekrümmter zu einem Ring zusammengefügter Hülsen 11, die sich an ihren Enden berühren und auf einem als Band 12 ausgebildeten Führungselement aufgereiht sind.

In Fig. 4 ist der Abschnitt eines ringförmigen inneren Stützelementes gezeigt, das aus einer Vielzahl an ihren Enden aneinanderstoßender gekrümmter Rundstücke 13 besteht, die in einem Schlauchkörper 14 als Führungselement eingebettet sind.

## Patentansprüche

1. Förderschlauch mit einer durch eine Bewehrung (1) verstärkten Schlauchwand, mindestens einen geteilt ausgebildeten sowie den Schlauch umschliessenden hülsenförmigen Schwimmkörper (4) und mindestens einer auf der Außenseite um seinen Umfang verlaufenden Schulter (6), die in eine korrespondierend gestaltete Nut (5) des Schwimmkörpers eingreift, für Saugbagger oder Be- und Entladestationen von auf Reede liegenden Tankern, dadurch gekennzeichnet, daß im Bereich der Schulter (6) ober- und unterhalb der Bewehrung (1) in die Schlauchwandung äußere bzw. innere Stützelemente (7, 8) eingebettet sind, die eine Umfangsvergrößerung des Schlauches bei erhöhtem Innendruck sowie eine Umfangsverringerung des Schlauches bei erhöhten axialen Zugbelastungen unterbinden.

2. Förderschlauch nach Anspruch 1, dadurch gekennzeichnet, daß die äußeren Stützelemente (7) aus mindestens einer den Schlauch umschlingenden Lage eines Metall- und/oder Textilgewebes bestehen.

3. Förderschlauch nach Anspruch 1 oder 2, dadurch gekennzeichnet, daß die äußeren Stützelemente (7) aus einer mindestens einlagigen Wendel mit etwa 90° Steigerung zur Achse des Schlauches bestehen.

4. Förderschlauch nach einem der vorhergehenden Ansprüche, dadurch gekennzeichnet, daß die inneren Stützelemente (8) aus mindestens einer zu einem Ring zusammengefügten Wendel (9) bestehen, deren Windungen (10) einander berühren.

5. Förderschlauch nach einem der Ansprüche 1 bis 3, dadurch gekennzeichnet, daß die inneren Stützelemente (8) aus einer Vielzahl von der Umfangskrümmung der Schlauchwandung angepaßter Hülsen bzw. Ringkörpern (11) oder Rundstücken (13) bestehen, die so zu einem Ring zusammengefügt sind, daß sich ihre Enden berühren.

6. Förderschlauch nach Anspruch 5, dadurch gekennzeichnet, daß die Hülsen (11) oder Ringkörper auf einem als Band (12) ausgebildeten inneren Führungselement angeordnet sind.

7. Förderschlauch nach Anspruch 5, dadurch gekennzeichnet, daß die Rundstücke (13) in einen Schlauchkörper (14) als äußeres Führungselement eingebettet sind.

8. Förderschlauch nach einem der vorhergehenden Ansprüche, dadurch gekennzeichnet, daß in der Innenengummischicht über dessen Länge verteilt zwischen den Schultern (6) weitere innere Stützelemente (15) angeordnet sind, die aus zu einem Ring zusammengefügten Wendeln (9), deren Windungen (10) einander berühren, oder aus einer Vielzahl von der Umfangskrümmung der Schlauchwandung angepaßter Hülsen (11), Ringkörpern oder Rundstücken (13) bestehen, die so zu einem Ring zusammengefügt sind, daß sich ihre Enden berühren.

## Claims

1. Conveying hose with a hose wall reinforced by armouring (1), at least one sleeve-like float (4) which is divided in design and surrounds the hose and at least one shoulder (6) which extends round its circumference on the exterior and engages in a correspondingly shaped groove (5) of the float, for suction dredgers or loading and unloading stations of tankers located in roadsteads, characterised in that, in the region of the shoulder (6) above and below the armouring (1) there are embedded into the hose wall outer and inner supporting elements (7, 8) which prevent enlargement of the circumference of the hose under increased internal pressure and reduction of the circumference of the hose under increased axial tensile stresses.

2. Conveying hose according to claim 1, characterised in that outer supporting elements (7) consist of at least one layer of a metal and/or textile fabric wound round the hose.

3. Conveying hose according to claim 1 or 2, characterised in that the outer supporting elements (7) consist of a spiral which is at least single-layered with a rise of about 90° relative to the axis of the hose.

4. Conveying hose according to one of the preceding claims, characterised in that the inner supporting elements (8) consist of at least one spiral (9) which is connected to form a ring and of which the turns (10) touch one another.

5. Conveying hose according to one of claims 1 to 3, characterised in that the inner supporting elements (8) consist of a plurality of sleeves or annular bodies (11) or round members (13) which are adapted to the circumferential curvature of the hose wall and are connected to form a ring such that their ends touch one another.

6. Conveying hose according to claim 5, characterised in that the sleeves (11) or annular bodies are arranged on an inner guide element designed as a band (12).

7. Conveying hose according to claim 5, characterised in that the round members (13) are embedded as an outer guide element in a hose body (14).

8. Conveying hose according to one of the preceding claims, characterised in that in the inner rubber layer, distributed over the length thereof, between the shoulders (6) there are arranged further inner supporting elements (15) which consist of spirals (9) which are connected to form a ring and of which the turns (10) touch one another or of a plurality of sleeves (11), annular bodies or round members (13) which are adapted to the circumferential curvature of the hose wall and are connected to form a ring such that their ends touch one another.

## Revendications

1. Tuyau souple pour transport, ayant une paroi de tuyau renforcée par une armature (1), au moins un flotteur (4) en forme de manchon composé de plusieurs parties et entourant le tuyau souple, et au moins un collier (6) s'étendant extérieurement autour de sa circonférence et s'engageant dans une rainure (5) à profil correspondant du flotteur, pour des dragues suceuses ou des stations de remplissage ou de vidage de bateaux-réservoirs stationnés en rade, caractérisé en ce que des éléments de soutien extérieurs et intérieurs (7, 8) sont, dans la région des colliers (6), incorporés à la paroi du tuyau souple respectivement au-dessus et en dessous de l'armature (1), éléments qui empêchent une augmentation de la circonférence du tuyau souple sous l'effet d'une pression intérieure accrue aussi bien qu'une diminution de la circonférence du tuyau souple sous l'effet de charges de traction axiales accrues.

2. Tuyau souple de transport selon la revendication 1, caractérisé en ce que les éléments de soutien extérieurs (7) sont constitués par au moins une couche de tissu métallique et/ou textile enroulée autour du tuyau souple.

3. Tuyau souple de transport selon la revendication 1 ou 2, caractérisé en ce que les éléments de soutien extérieurs (7) sont constitués par une hélice en une couche au moins avec une inclinaison de 90° environ par rapport à l'axe du tuyau souple.

4. Tuyau souple de transport selon l'une des revendications précédentes, caractérisé en ce que les éléments de soutien intérieurs (8) sont constitués par au moins une hélice (9), refermée en bague, dont les spires (10) sont en contact mutuel.

5. Tuyau souple de transport selon l'une des revendications 1 à 3, caractérisé en ce que les éléments de soutien intérieurs (8) sont constitués par une multiplicité de manchons (11) ou corps annulaires, ou pièces cylindriques (13), qui sont adaptés à la courbure circonférentielle de la paroi du tuyau souple et réunis en un anneau de telle sorte que leurs extrémités sont en contact.

6. Tuyau souple de transport selon la revendication 5, caractérisé en ce que les manchons (11) ou corps annulaires sont disposés sur un élément de guidage intérieur analogue à un cordon (12).

7. Tuyau souple de transport selon la revendication 5, caractérisé en ce que les pièces cylindriques (13) sont noyées dans une corps de tuyau souple (14) servant d'élément de guidage extérieur.

8. Tuyau souple de transport selon l'une des revendications précédentes, caractérisé en ce que des éléments de soutien intérieurs supplémentaires (15) sont disposés entre les colliers (6), dans la couche intérieure de caoutchouc, en étant répartie sur sa longueur, éléments qui sont constitués d'hélices (9) réunis en bague dont les spires (10) sont en contact mutuel, ou d'une multiplicité de manchons (11), corps annulaires ou pièces cylindriques (13), qui sont adaptés à la courbure circonférentielle de la paroi du tuyau souple et réunis en bague de telle sorte que leurs extrémités sont en contact.

Fig. 1

Fig.2

Fig.3

Fig.4